(19) Europäisches Patentamt

European Patent Office

Office européen des brevets

(11) **EP 4 485 636 A1**

(12) **EUROPEAN PATENT APPLICATION**

(43) Date of publication:
**01.01.2025 Bulletin 2025/01**

(21) Application number: **24182206.3**

(22) Date of filing: **14.06.2024**

(51) International Patent Classification (IPC):
**H01M 50/107** (2021.01)  **H01M 50/152** (2021.01)
**H01M 50/342** (2021.01)  **H01M 50/578** (2021.01)
**H01M 50/169** (2021.01)  **H01M 50/171** (2021.01)

(52) Cooperative Patent Classification (CPC):
**H01M 50/3425; H01M 50/107; H01M 50/152;
H01M 50/169; H01M 50/171; H01M 50/578**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.06.2023 KR 20230077374**

(71) Applicant: **Samsung SDI Co., Ltd.**
**Yongin-si, Gyeonggi-do 17084 (KR)**

(72) Inventors:
• **Kim, Dae Kyu**
**17084 Yongin-si, Gyeonggi-do (KR)**
• **Park, Jongjun**
**17084 Yongin-si, Gyeonggi-do (KR)**
• **Seo, Kwangsoo**
**17084 Yongin-si, Gyeonggi-do (KR)**
• **Kim, Shinjung**
**17084 Yongin-si, Gyeonggi-do (KR)**

(74) Representative: **Gulde & Partner**
**Patent- und Rechtsanwaltskanzlei mbB**
**Wallstraße 58/59**
**10179 Berlin (DE)**

(54) **RECHARGEABLE BATTERY**

(57)      A rechargeable battery includes an electrode assembly, a can accommodating the electrode assembly in an internal region of the can, and a cap assembly coupled to the can to seal the can. The cap assembly includes a safety vent and a cap down stacked with a connecting member interposed between the safety vent and the cap down. The safety vent comprises a central part joined to the cap down, a middle part comprising a step portion and a notch groove, a fusion part in contact with the connecting member, and a wing part surrounding the fusion part. At least three of the central part, middle part, the fusion part, or the wing part have different thicknesses.

FIG. 3

**Description**

<u>FIELD</u>

The present disclosure relates to a rechargeable battery. More particularly, the present disclosure relates to a rechargeable battery having a safety vent.

<u>BACKGROUND</u>

Generally, a rechargeable battery includes an electrode assembly, a can which accommodates the electrode assembly inside, and a cap assembly which is assembled in an opening of the can to seal the can and allow current generated in the electrode assembly to flow to an external device.

<u>SUMMARY OF THE INVENTION</u>

The present invention is set out in the appended set of claims, wherein the drawings and respective description relate to advantageous embodiments thereof.

The present invention provides a rechargeable battery capable of easily controlling the operating pressure and breaking pressure of a safety vent.

According to the present invention, it is possible to easily control the swelling curve of a single safety vent by adjusting the shape of the safety vent and the thickness difference for each region, and easily control the operating pressure and breaking pressure in a rechargeable battery to which the safety vent is applied. Additionally, the rechargeable battery according to the present invention is able to improve the reliability and safety of the rechargeable battery by minimizing the operational dispersion (deviation) of the cap assembly.

A rechargeable battery according to a first aspect of the present invention includes an electrode assembly, a can accommodating the electrode assembly in an internal region of the can, and a cap assembly coupled to the can to seal the can. The cap assembly includes a safety vent and a cap down stacked with a connecting member interposed between the safety vent and the cap down. The safety vent comprises a central part joined to the cap down, a middle part comprising a step portion and a notch groove, a fusion part in contact with the connecting member, and a wing part surrounding the fusion part. At least three of the central part, middle part, the fusion part, or the wing part have different thicknesses.

The wing part may include a first part and a second part overlapping the first part and formed by bending the second part over the first part, and a thickness of the wing part may be a thickness of one of the first part or the second part individually. The middle part may be disposed between the central part and the fusion part, and the notch groove may be disposed on a first surface of the middle part between the step portion and the fusion part, the first surface facing the cap down. The cap assembly may be coupled to the can via an insulating gasket surrounding the wing part.

The central part may have a first thickness T1, the middle part may have a second thickness T2, the fusion part may have a third thickness T3, and the wing part may have a fourth thickness T4, and the safety vent may satisfy the following condition (1):

$$T1 > (T2 = T3) > T4 \text{ --- (1).}$$

On the other hand, the middle part may include an inner part comprising the step portion and an outer part comprising the notch groove. The central part may have a fifth thickness T5, the inner part may have a sixth thickness T6, the outer part may have a seventh thickness T7, the fusion part may have an eighth thickness T8, and the wing part may have a ninth thickness, and the safety vent may satisfy the following condition (2):

$$T5 > T6 > (T7 = T8 = T9) \text{ --- (2).}$$

On the other hand, the central part may have a tenth thickness T10, the middle part may have an eleventh thickness T11, the fusion part may have a twelfth thickness T12, and the wing part may have a thirteenth thickness T13, and the safety vent may satisfy the following condition (3):

$$(T10 = T12) > T13 > T11 \text{ --- (3).}$$

A rechargeable battery according to another aspect of the present invention includes an electrode assembly, a can accommodating the electrode assembly in an internal region of the can, and a cap assembly coupled to the can to seal the can. The cap assembly comprises a safety vent and a cap down stacked with a connecting member interposed between the safety vent and the cap down, and a cap-up covering the safety vent. The safety vent comprises a central part joined to the cap down, a middle part comprising a step portion and a notch groove, a fusion part in contact with the connecting member, and an edge part surrounding the fusion part. At least three of the central part, the middle part, the fusion part, or the edge part have different thicknesses.

The middle part may be disposed between the central part and the fusion part, and the notch groove may be disposed on a first surface of the middle part between the step part and the fusion part, the first surface facing the cap down.

The central part may have a first thickness T1, the middle part may have a second thickness T2, the fusion part may have a third thickness T3, and the edge part may have a fourth thickness T4, and the safety vent may satisfy the following condition (4):

$$T1 > (T2 = T3) > T4 \text{ --- } (4).$$

On the other hand, the middle part may include an inner part comprising the step portion and an outer part comprising the notch groove. The central part may have a fifth thickness T5, the inner part may have a sixth thickness T6, the outer part may have a seventh thickness T7, the fusion part may have an eighth thickness T8, and the edge part may have a ninth thickness, and the safety vent may satisfy the following condition (5):

$$T5 > T6 > (T7 = T8 = T9) \text{ --- } (5).$$

On the other hand, the central part may have a tenth thickness T10, the middle part may have an eleventh thickness T11, the fusion part may have a twelfth thickness, and the edge part may have a thirteenth thickness T13, and the safety vent may satisfy the following condition (6):

$$(T10 = T12) > T13 > T11 \text{ --- } (6).$$

According to a third aspect of the present invention, there is provided a method of manufacturing a rechargeable battery. The method comprises accommodating an electrode assembly in an internal region of a can; and sealing the can with a cap assembly. The cap assembly includes a safety vent and a cap down stacked with a connecting member interposed between the safety vent and the cap down, the safety vent comprising: a central part joined to the cap down; a middle part comprising a step portion and a notch groove; a fusion part in contact with the connecting member; and a wing part surrounding the fusion part; and wherein at least three of the central part, the middle part, the fusion part, or the wing part have different thicknesses.

The wing part may include a first part and a second part overlapping the first part and formed by bending the second part over the first part; and a thickness of the wing part may have a thickness of one of the first part or the second part individually.

The middle part may be disposed between the central part and the fusion part; and the notch groove may be disposed on a first surface of the middle part between the step portion and the fusion part, the first surface facing the cap down.

In some embodiments, sealing the can with the cap assembly may comprise coupling the cap assembly to the can via an insulating gasket surrounding the wing part.

The central part may have a first thickness T1, the middle part may have a second thickness T2, the fusion part may have a third thickness T3, and the wing part may have a fourth thickness T4, and the safety vent may satisfy the following conditions: T1 > (T2 = T3) > T4.

The middle part may include an inner part comprising the step portion and an outer part comprising the notch groove; and the central part may have a fifth thickness T5, the inner part may have a sixth thickness T6, the outer part may have a seventh thickness T7, the fusion part may have an eight thickness T8, and the wing part may have a ninth thickness T9, and the safety vent may satisfy the following conditions: T5 > T6 > (T7 = T8 = T9).

The central part may have a tenth thickness T10, the middle part may have an eleventh thickness T11, the fusion part may have a twelfth thickness T12, and the wing part may have a thirteenth thickness T13, and the safety vent may satisfy the following conditions: (T10 = T12) > T13 > T11.

In some embodiments, the method may further comprise forming the safety vent of the cap assembly at least in part by joining the central part to the cap down.

## BRIEF DESCRIPTION OF THE DRAWINGS

FIG. 1 is a perspective view of a rechargeable battery according to an embodiment.

FIG. 2 is a cross-sectional view of the rechargeable battery shown in FIG. 1, according to some embodiments.

FIG. 3 is an enlarged view of a cap assembly of the rechargeable battery shown in FIG. 2, according to some embodiments.

FIG. 4 illustrates a safety vent in the cap assembly shown in FIG. 3, according to some embodiments.

FIG. 5 and 6 are diagrams for describing the operating process of the cap assembly, according to some embodiments.

FIG. 7 is an enlarged view of a cap assembly of a rechargeable battery according to a second embodiment.

FIG. 8 illustrates a safety vent in the cap assembly shown in FIG. 7, according to some embodiments.

FIG. 9 is an enlarged view of a cap assembly of a rechargeable battery according to a third embodiment.

FIG. 10 illustrates a safety vent in the cap assembly shown in FIG. 9, according to some embodiments.

FIG. 11 is a graph illustrating the swelling curves of three safety vents according to the first to third embodiments.

FIG. 12 is a partially enlarged cross-sectional view of a rechargeable battery according to a fourth embodiment.

FIG. 13 illustrates a safety vent in the rechargeable battery shown in FIG. 12, according to some embodiments.

FIG. 14 is a cross-sectional view of a cap assembly of a rechargeable battery according to a fifth embodiment.

FIG. 15 illustrates a safety vent in the cap assembly shown in FIG. 14, according to some embodiments.

FIG. 16 is a cross-sectional view of a cap assembly of a rechargeable battery according to a sixth embodiment.

FIG. 17 illustrates a safety vent in the cap assembly shown in FIG. 16, according to some embodiments.

## DETAILED DESCRIPTION OF THE EMBODIMENTS

Aspects of the technology will be described more fully hereinafter with reference to the accompanying drawings, in which exemplary embodiments of the invention are shown.

As described herein, a rechargeable battery may include an electrode assembly, a can which accommodates the electrode assembly inside, and a cap assembly which is assembled in an opening of the can to seal the can and allows current generated in the electrode assembly to flow to an external device. The cap assembly may include a safety vent to prevent explosion of the rechargeable battery.

The safety vent deforms when the internal pressure of the can rises, blocking the flow of current, and breaks away when the pressure continues to rise, releasing the internal gas. The operating pressure when the safety vent deforms and blocks the flow of current, and the breaking pressure when the internal gas is discharged by breaking, depend on the shape and thickness of the safety vent.

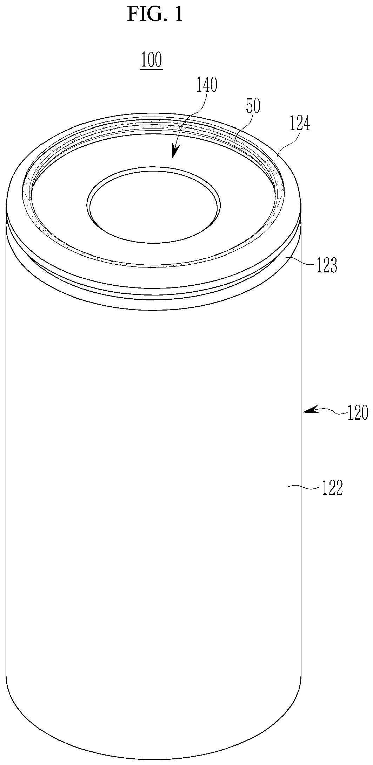

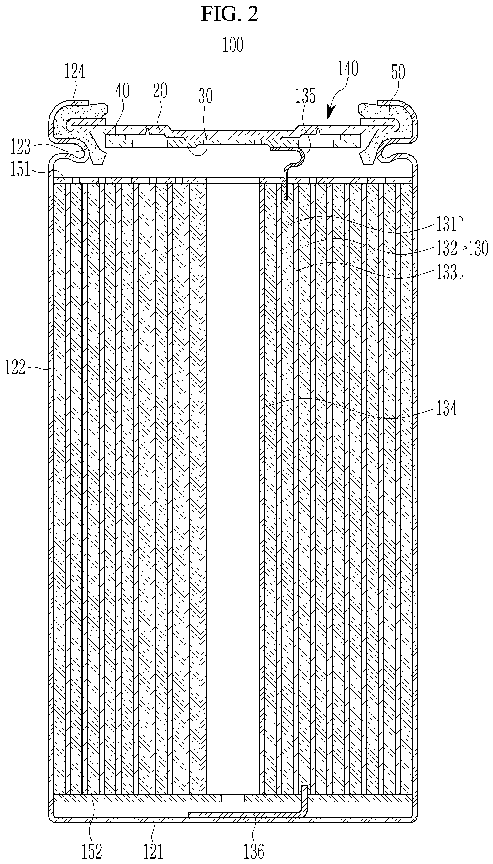

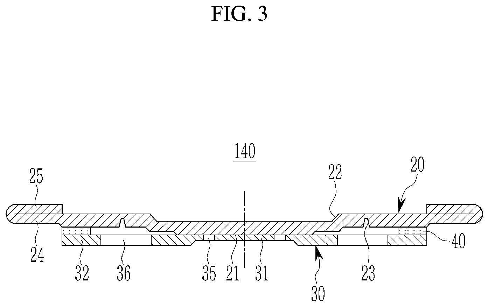

FIG. 1 is a perspective view of a rechargeable battery according to an embodiment. FIG. 2 is a cross-sectional view of the rechargeable battery shown in FIG. 1, according to some embodiments. FIG. 3 is an enlarged view of a cap assembly of the rechargeable battery shown in FIG. 2, according to some embodiments.

Referring to FIGS. 1 to 3, a rechargeable battery 100 according to the present embodiment may include a can 120, an electrode assembly 130 accommodated inside the can 120, and a cap assembly 140 assembled to an opening of the can 120 to seal the can 120. The cap assembly 140 may include a safety vent 20 that prevents the rechargeable battery 100 from exploding. The safety vent 20 may be referred to as a current interruptive device (CID).

The rechargeable battery 100 of the present embodiment may have a cylindrical shape, but is not limited to this example. The can 120 may include a bottom portion 121 and a side portion 122. The bottom portion 121 may be a disk, and the side portion 122 may be cylindrical. During the manufacturing process of the rechargeable battery 100, one side (e.g., upper portion opposite the bottom portion 121) of the can 120 is open, and the electrode assembly 130 may be accommodated inside the can 120 together with the electrolyte. In some embodiments, the can 120 may be made of steel, steel alloy, aluminum, aluminum alloy, or the like.

A beading portion 123 and a crimping portion 124 may be disposed on the side portion 122 of the can 120. The beading portion 123 may be a portion deformed concavely toward the inside of the can 120. The crimping portion 124 may be a portion where the edge of the side portion 122 is vertically bent toward the inside of the side portion 122. The movement of the electrode assembly 130 may be suppressed by the beading portion 123, and the cap assembly 140 may be fixed to the can 120 by the beading portion 123 and the crimping portion 124.

The electrode assembly 130 may include a positive electrode 131, a negative electrode 132, and a separator 133. The positive electrode 131 may include a positive substrate and a positive active material layer disposed on the positive substrate. The negative electrode 132 may include a negative substrate and a negative active material layer disposed on the negative substrate. The positive substrate may include aluminum foil, and the positive active material may include transition metal oxides such as $LiCoO_2$, $LiNiO_2$, $LiMn_2O_4$. The negative substrate may include copper foil or nickel foil, and the negative active material may include graphite or carbon .

The separator 133 insulates the positive electrode 131 and the negative electrode 132 while allowing movement of lithium ions. The separator 133 may include polyethylene or polypropylene for example.

The positive electrode 131, the negative electrode 132, and the separator 133 may be wound into a substantially cylindrical shape, and a cylindrical center pin 134 may be disposed in the center of the electrode assembly 130. The center pin 134 may suppress deformation of the electrode assembly 130 during the charging and discharging process of the rechargeable battery 100, and may act as a passage for gas generated inside the rechargeable battery 100. The center pin 134 may be omitted in some cases.

The positive electrode 131 may include a positive electrode tab 135 attached to the positive substrate, and the negative electrode 132 may include a negative electrode tab 136 attached to the negative substrate. The positive electrode tab 135 and the negative electrode tab 136 may be disposed on opposite sides of each other. For example, the positive electrode tab 135 may be disposed on one side (e.g., upper side) of the electrode assembly 130 facing the cap assembly 140 and may be fixed to the cap assembly 140. The negative electrode tab 136 may be disposed on one side (e.g., lower side) of the electrode assembly 130 facing the bottom portion 121 of the can 120 and may be fixed to the bottom portion 121.

A first insulating plate 151 may be disposed between the electrode assembly 130 and the cap assembly 140, and a second insulating plate 152 may be disposed between the electrode assembly 130 and the bottom portion 121 of the can 120. The first insulating plate 151 may prevent the negative electrode 132 of the electrode assembly 130 from contacting the cap assembly 140, and the second insulating plate 152 may prevent the positive electrode 131 of the electrode assembly 130 from contacting the can 120.

A hole connected to the inside of the center pin 134, a hole for passage of the positive electrode tab 135, and a plurality of holes for electrolyte injection may be disposed at the first insulating plate 151. A hole connected to the inside of the center pin 134 and a hole for passage of the negative electrode tab 136 may be disposed at the second insulating plate 152.

The cap assembly 140 may include a safety vent 20 that also functions as a cap-up, a cap-down 30 disposed on one side (e.g., lower side) of the safety vent 20 toward the electrode assembly 130, and a connecting member 40 disposed between the safety vent 20 and the cap down 30. The cap assembly 140 may further include an insulating gasket 50 that insulates the safety vent 20 from the side portion 122 of the can 120. The insulating gasket 50 may surround the edge of the safety vent 20 and may be pressed between the beading portion 123 and the crimping portion 124 of the can 120.

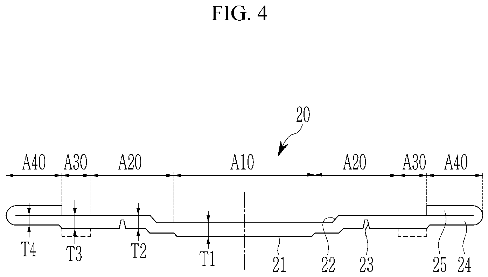

FIG. 4 illustrates a safety vent 20 in the cap assembly 140 shown in FIG. 3, according to some embodiments.

Referring to FIGS. 3 and 4, the safety vent 20 and the cap down 30 may have an approximate disk shape and may be made of conductive metal. The diameter of the cap down 30 may be smaller than the diameter of the safety vent 20, and central parts A10 and 31 of each of the safety vent 20 and the cap down 30 may be joined to each other. The connecting member 40 may have a ring shape and may be made of an insulating material.

The safety vent 20 may be divided into four regions depending on the position thereof. Specifically, the safety vent 20 may include a central part A10 where a contact portion 21 is disposed, a middle part A20 where a step portion 22 and a notch groove 23 are disposed, a fusion part A30 in contact with the connecting member 40, and a wing part A40 that forms the edge of the safety vent 20. The cap assembly 140 may be coupled to the can 120 via the insulating gasket 50 surrounding the wing part A40. Thus, the can 120 may be sealed with the cap assembly 140 comprising coupling the cap assembly 140 to the can 120 via the insulating gasket 50 surrounding the wing part A40.

The contact portion 21 may be a part that contacts the cap down 30 on one surface (e.g., lower surface) of the safety vent 20 toward the cap down 30, and may be integrally joined to the cap down 30 by a method such as welding. The central part A10 where the contact portion 21 is disposed has a first thickness T1.

The step portion 22 may be a part inclined toward the outside (e.g., upper side) of the cap assembly 140 so as to be protruding away from the cap down 30. The notch groove 23 may be disposed on one surface (e.g., lower surface) of the safety vent 20 toward the cap down 30 at the middle part A20 of the safety vent 20, and may make the thickness of the safety vent 20 thinner than other parts. The notch groove 23 may be V-shaped, and the depth of the notch groove 23 may be more than half the thickness of the middle part A20, but it is not limited thereto. The notch groove 23 may be disposed between the step portion 22 and the fusion part A30. The middle part A20 has a second thickness T2 except for the part where the notch groove 23 is disposed.

The middle part A20 may be disposed between the central parts A10 and 31 and the fusion part A30. The notch groove 23 may be disposed on a first surface of the middle part A20 between the step portion 22 and the fusion part A30, the first surface facing the cap down 30.

The middle part A20 and the fusion part A30 may be disposed at a predetermined distance from the cap down 30, and the connecting member 40 may be disposed between the fusion part A30 and the cap down 30. The connecting member 40 may be integrally coupled with the fusion part A30 and the cap down 30 by fusion. The fusion part A30 has a third thickness T3.

The wing part A40 may include a first part 24 and a second part 25 that are overlapped by bending the safety vent 20. Thus, the wing part A40 may include a first part 24 and a second part 25 overlapping the first part 24 and formed by bending the second part 25 over the first part 24. The first part 24 may be disposed parallel to the fusion part A30, and the second part 25 may be bent from the first part 24 and overlap the first part 24. The second part 25 may be disposed outside (e.g., upper side) of the cap assembly 140 than the first part 24. The wing part A40 has a fourth thickness T4. At this time, the fourth thickness T4 is the thickness of each of the first part 24 and the second part 25, respectively. That is, the fourth thickness T4 is equal to the thickness of either the first part 24 or the second part 25 taken alone, as illustrated in FIG. 4.

Since the wing part A40 is an edge of the safety vent 20 that is coupled to the can 120 via the insulating gasket 50, the wing part A40 must have high rigidity. As the first part 24 and the second part 25 are overlapped by bending to form the wing part A40, the wing part A40 may have high rigidity.

The cap down 30 may be divided into two regions depending on the position thereof. Specifically, the cap down 30 may include a central part 31 that overlaps the central part A10 of the safety vent 20 and a peripheral part 32 surrounding the central part 31. One surface (e.g., upper surface) of the central part 31 toward the safety vent 20 may be joined to the contact portion 21, and one surface (e.g., upper surface) of the peripheral part 32 may be disposed separated from the middle part A20 and the fusion part A30 (e.g., at least in part by the connecting member 40).

The entire surface (e.g., upper surface) of the cap down 30 toward the safety vent 20 may be a flat surface without curves, and the thickness of the central part 31 may be smaller than the thickness of the peripheral part 32. The diameter of the cap down 30 may be the same as or similar than the diameter of the fusion part A30. At least one first through hole 35 may be disposed in the central part 31, and at least one second through hole 36 may be disposed in the peripheral part 32. Each of the first and second through holes 35 and 36 may have an arc shape, and the width of the first through hole 35 may be smaller than the width of the second through hole 36.

The positive electrode tab 135 of the electrode assembly 130 may be fixed to one surface (e.g., lower surface) of the cap down 30, and the cap down 30 and the safety vent 20 may be positively charged. The safety vent 20 may contact an external device and function as a terminal (positive electrode terminal) that allows current to flow to the external device.

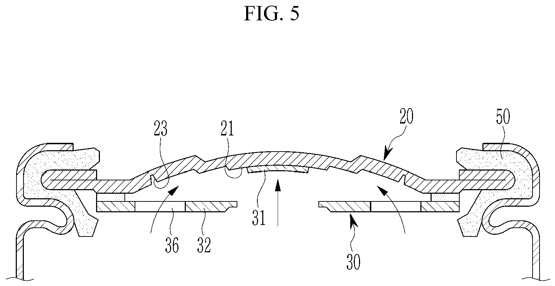

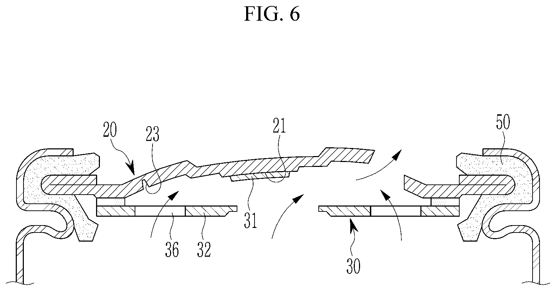

During the use of the rechargeable battery 100, gas may be generated inside the can 120 for various reasons, and the internal pressure of the rechargeable battery 100 may increase due to the gas. FIG. 5 and 6 are diagrams for describing an operating process of the cap assembly, according to some embodiments.

Referring to FIGS. 3, 5, and 6, when gas is generated, pressure is continuously applied to the safety vent 20 through the first and second through holes 35 and 36 of the cap down 30. At a specific internal pressure, the safety vent 20 may be deformed toward the outside (e.g., upper side) of the cap assembly 140, so that the safety vent 20 and the cap down 30 may be separated from each other. At this time, the central part 31 of the cap down 30 may be broken from the peripheral part 32 and rise together with the safety vent 20 while attached to the contact portion 21 of the safety vent 20 (e.g., as shown in FIG. 5). Current flow may be blocked by separation of the safety vent 20 and the cap down 30. Afterwards, when the pressure continues to rise, the safety vent 20 may be broken around the notch groove 23 and the internal gas may be discharged (e.g., as shown in FIG. 6).

Referring again to FIGS. 3 and 4, the safety vent 20 may include a part formed having a thickness smaller than the thickness of the original raw material by forging the raw material. As described herein, the safety vent 20 may be divided into four regions A10, A20, A30 and A40 depending on the position of the region. Each of the four regions A10, A20, A30 and A40 has first to fourth thicknesses T1, T2, T3 and T4, and at least three of the first to fourth thicknesses T1, T2, T3 and T4 may have different values. In the rechargeable battery 100 of the first embodiment, the safety vent 20 may satisfy Equation 1 below.

$$(\text{Equation 1})$$

$$T1 > (T2 = T3) > T4$$

In the safety vent 20, the thickness T1 of the central part A10 may be the largest, and the thickness T4 of the wing part A40 may be the smallest. The thicknesses T2 and T3 of the middle part A20 and the fusion part A30 may be smaller than the thickness T1 of the central part A10 and greater than the thickness T4 of the wing part A40. The safety vent 20 generally has a smaller thickness as it moves away from the central part A10, and the wing part A40 may be made of the first part 24 and the second part 25 overlapped by bending.

The pressure when the safety vent 20 is deformed and blocks the flow of current is referred to as the operating pressure (see FIG. 5, for example), and the pressure when the safety vent 20 is broken around the notch groove 23 to discharge the internal gas is referred to as the breaking pressure (see FIG. 6, for example). The operating pressure and breaking pressure greatly depend on the shape and thickness of the safety vent 20. In the present embodiment, the operating pressure and breaking pressure may be easily controlled due to the various thickness differences in each region of the safety vent 20.

For example, assuming the safety vent of the comparative example has one thickness or only one thickness difference, the variables that can control the operating pressure and breaking pressure are not diverse, so it is not easy to control the operating pressure and breaking pressure. On the other hand, in the rechargeable battery 100 according to the present embodiment, the safety vent 20 may vary the variables that can control the operating pressure and breaking pressure by using the thickness difference for each region, so it is possible to easily control the operating pressure and the breaking pressure.

Next, modifications of the cap assembly 140 will be described. Below, configurations different from those of the first embodiment will be mainly described, and overlapping descriptions of the same configurations as those of the first embodiment will be omitted.

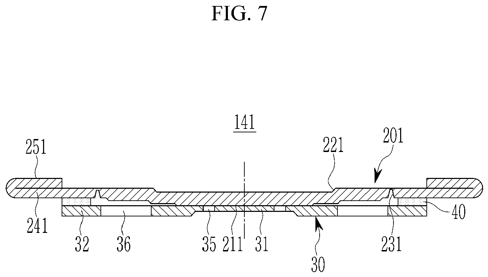

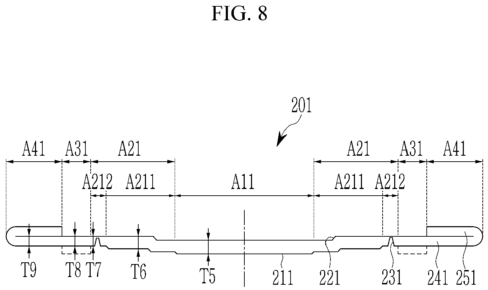

FIG. 7 is an enlarged view of the cap assembly of the rechargeable battery according to a second embodiment. FIG. 8 illustrates a safety vent in the cap assembly shown in FIG. 7, according to some embodiments. The rechargeable battery of the second embodiment has the same or similar configuration as the first embodiment described above, except for aspects of the safety vent described below.

Referring to FIGS. 7 and 8, a safety vent 201 of a cap assembly 141 may include a central part A11 where a contact portion 211 is disposed, a middle part A21 where a step portion 221 and a notch groove 231 are disposed, a fusion part A31 in contact with the connecting member 40, and a wing part A41 forming an edge of the safety vent 201. At this time, the middle part A21 may be divided into an inner part A211 where the step portion 221 is disposed, and an outer part A212 where the notch groove 231 is disposed. The wing part A41 may include a first part 241 and a second part 251 that are overlapped by bending.

The central part A11, the inner part A211, the outer part A212, the fusion part A31, and the wing part A41 respectively have a fifth thickness T5, a sixth thickness T6, a seventh thickness T7, an eighth thickness T8 and a ninth thickness T9. In the rechargeable battery of the second embodiment, the safety vent 201 may satisfy Equation 2 below.

$$\text{(Equation 2)}$$

$$T5 > T6 > (T7 = T8 = T9)$$

In the safety vent 201, the thickness T5 of the central part A11 may be the largest, and the thicknesses T7, T8, and T9 of the outer part A212, the fusion part A31, and the wing part A41 may be the smallest. The thickness T6 of the inner part A211 may be smaller than the thickness T5 of the central part A11, and may be larger than the thicknesses T7, T8, and T9 of the outer part A212, the fusion part A31, and the wing part A41.

The width of the inner part A211 where the step portion 221 is disposed may be larger than the width of the outer part A212 where the notch groove 231 is disposed, and the notch groove 231 may be disposed close to the connecting member 40 (e.g., closer to the connecting member 40 than the step portion 221 is disposed). The safety vent 201 according to the present embodiment also generally has a smaller thickness as it moves away from the central part A11, and has three different thicknesses in total.

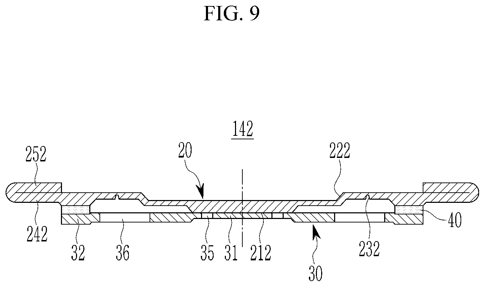

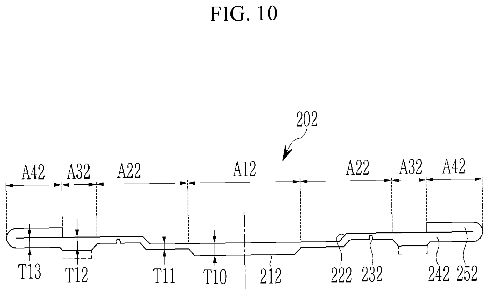

FIG. 9 is an enlarged view of a cap assembly of a rechargeable battery according to a third embodiment. FIG. 10 illustrates a safety vent in the cap assembly shown in FIG. 9, according to some embodiments. The rechargeable battery of the third embodiment has the same or similar configuration as the first embodiment described above, except for aspects of the safety vent described below.

Referring to FIGS. 9 and 10, a safety vent 202 of a cap assembly 142 may include a central part A12 where a contact portion 212 is disposed, a middle part A22 where a step portion 222 and a notch groove 232 are disposed, a fusion part A32 in contact with the connecting member 40, and a wing part A42 forming an edge of the safety vent 202. The wing part A42 may include a first part 242 and a second part 252 that are overlapped by bending.

The central part A12, the middle part A22, the fusion part A32, and the wing part A42 have a tenth thickness T10, an eleventh thickness T11, a twelfth thickness T12, and a thirteenth thickness T13, respectively. In the rechargeable battery of the third embodiment, the safety vent 202 may satisfy Equation 3 below.

$$\text{(Equation 3)}$$

$$(T10 = T12) > T13 > T11$$

In the safety vent 202, the thicknesses T10 and T12 of the central part A12 and the fusion part A32 may be the largest, and the thickness T11 of the middle part A22 may be the smallest. The thickness T13 of the wing part A42 may be smaller than the thicknesses T10 and T12 of the central part A12 and the fusion part A32, and may be larger than the thickness T11 of the middle part A22. The safety vent 202 according to the present embodiment has three different thicknesses. Unlike the first and second embodiments described above, the safety vent 202 has the smallest thickness at the middle part A22.

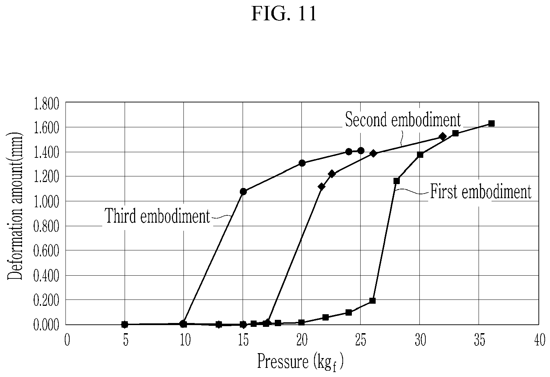

FIG. 11 is a graph illustrating the swelling curves of three safety vents according to the first to third embodiments.

Referring to FIG. 11, the swelling curve is a change curve of the amount of deformation in response to the pressure applied to the safety vent, and is based on the measurement results of a single safety vent before application to the rechargeable battery. The thickness of each region in each of the safety vents of the first to third embodiments used in the experiment is shown in Table 1 below.

(Table 1)

| First embodiment | | | Second embodiment | | | Third embodiment | | |
|---|---|---|---|---|---|---|---|---|
| T1 | T2, T3 | T4 | T5 | T6 | T7, T8, T9 | T10, T12 | T11 | T13 |
| 0.6mm | 0.5mm | 0.4mm | 0.6mm | 0.5mm | 0.4mm | 0.5mm | 0.2mm | 0.4mm |

The three types of safety vents according to the first to third embodiments implement different swelling curves due to differences in shape and thickness for each region. Specifically, compared to the safety vent of the first embodiment, the safety vent of the second embodiment has a different notch groove position, and the thickness of the part where the notch groove is disposed is smaller than that of the first embodiment. Compared to the safety vents of the first and second embodiments, the safety vent of the third embodiment has the smallest difference in thickness of the middle part where the step part and the notch groove are disposed throughout the safety vent.

Due to these differences, the safety vent of the first embodiment shows the least deformation under the same pressure condition, and the safety vent of the third embodiment shows the most deformation under the same pressure condition. In this way, it is possible to easily control the swelling curve of the safety vent by adjusting the shape of the safety vent and the difference in thickness for each region.

Next, the operating pressure and breaking pressure of eight samples for each of the rechargeable batteries of the first to third embodiments were measured and shown in Table 2 below. The thickness of each region of the safety vent applied to the rechargeable battery is the same as Table 1, the target specification of operating pressure for all rechargeable batteries according to the first to third embodiments is $16.0\pm2.0 Kg_f/cm^2$, and the target specification of breaking pressure is $25.0\pm4.0 Kg_f/cm^2$.

(Table 2)

| Sample No. | First embodiment | | Second embodiment | | Third embodiment | |
|---|---|---|---|---|---|---|
| | Operating pressure $(Kg_f/cm^2)$ | Breaking pressure $(Kg_f/cm^2)$ | Operating pressure $(Kg_f/cm^2)$ | Breaking pressure $(Kg_f/cm^2)$ | Operating pressure $(Kg_f/cm^2)$ | Breaking pressure $(Kg_f/cm^2)$ |
| 1 | 16.28 | 24.69 | 16.24 | 24.56 | 15.08 | 15.08 |
| 2 | 17.46 | 26.32 | 16.24 | 25.12 | 15.35 | 15.35 |
| 3 | 16.55 | 26.31 | 16.71 | 24.22 | 15.09 | 15.09 |
| 4 | 16.62 | 26.21 | 16.21 | 25.12 | 13.59 | 13.59 |
| 5 | 16.24 | 25.42 | 16.24 | 24.61 | 15.68 | 15.68 |
| 6 | 16.74 | 25.31 | 17.11 | 24.26 | 14.84 | 14.84 |
| 7 | 16.56 | 25.68 | 16.24 | 24.88 | 15.87 | 15.87 |
| 8 | 17.03 | 24.38 | 16.24 | 24.15 | 15.40 | 15.40 |
| Maximum value | 17.46 | 26.32 | 17.11 | 25.12 | 15.87 | 15.87 |
| Minimum value | 16.24 | 24.38 | 16.21 | 24.15 | 13.59 | 13.59 |
| Average value | 16.69 | 25.54 | 16.40 | 24.62 | 15.11 | 15.11 |

The fact that the operating pressure and the breaking pressure are the same in the rechargeable battery of the third embodiment means that the deformation of the safety vent being separated from the cap-down and the break centered on the notch groove occurred simultaneously. It can be seen that in the case of the rechargeable batteries of the first and second embodiments, the operating pressure and breaking pressure of the eight samples were all within the target specifications, and in the case of the rechargeable battery of the third embodiment, the operating pressures of the eight samples were within the target specifications.

According to the above-described embodiments, it is possible to easily control the swelling curve of a single safety vent by adjusting the shape of the safety vent and the thickness difference for each region of the safety vent, and easily control the operating pressure and breaking pressure in a rechargeable battery to which the safety vent is applied. Additionally, the rechargeable battery according to the embodiments may improve the reliability and safety of the rechargeable battery by minimizing the operational dispersion (deviation) of the cap assembly.

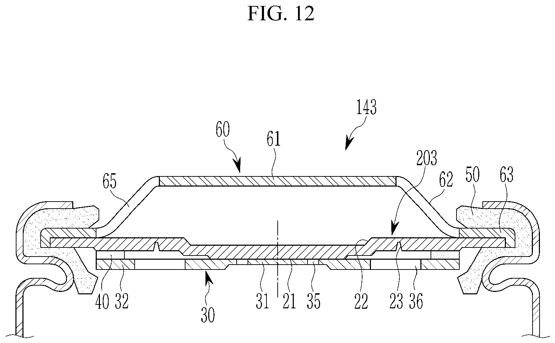

FIG. 12 is a partially enlarged cross-sectional view of a rechargeable battery according to a fourth embodiment.

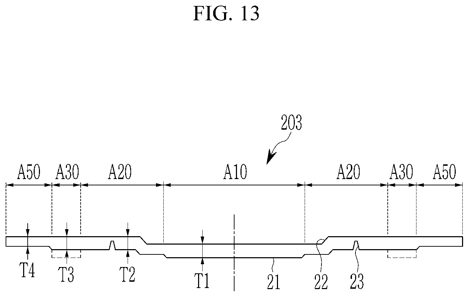

FIG. 13 illustrates a safety vent in the rechargeable battery shown in FIG. 12, according to some embodiments. The rechargeable battery of the fourth embodiment has the same structure as the first embodiment described above except for aspects of the cap assembly described herein.

Referring to FIGS. 12 and 13, a cap assembly 143 may further include a cap-up 60 that covers the safety vent 203, and the safety vent 203 may include a flat edge part A50 instead of a wing part. The cap-up 60 may be disposed on the outside (e.g., upper side) of the safety vent 203, and may be in contact with the safety vent 203 and may be electrically connected to the safety vent 203. The cap-up 60 may contact an external device and function as a terminal (e.g., a positive electrode terminal) that allows current to flow to the external device.

The cap-up 60 may include a terminal part 61 for contacting an external device, an inclined part 62 surrounding the terminal part 61, and a coupling part 63 surrounding the inclined part 62 and contacting the safety vent 203. At least one third through hole 65 for gas discharge may be disposed in the inclined part 62, and the coupling part 63 may be bent to cover both one surface (e.g., upper surface) and the side surface of the edge part A50.

The safety vent 203 may include the flat edge part A50 having the fourth thickness T4 instead of the wing part. The safety vent 203 may have the same configuration as the safety vent 20 of the first embodiment described above, except that the wing part is replaced with the edge part A50. In the rechargeable battery of the fourth embodiment, the safety vent 203 may satisfy the conditions of Equation 1 described above.

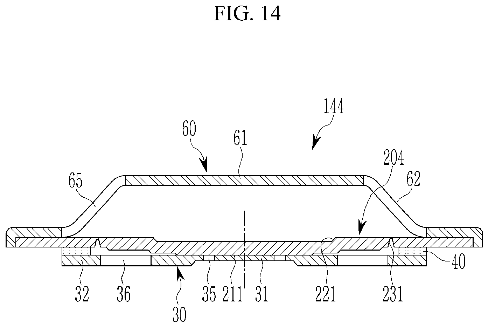

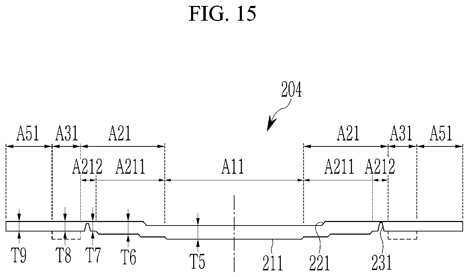

FIG. 14 is a cross-sectional view of a cap assembly of a rechargeable battery according to a fifth embodiment. FIG. 15 illustrates a safety vent in the cap assembly shown in FIG. 14, according to some embodiments. The rechargeable battery of the fifth embodiment has the same structure as the above-described second embodiment except for aspects of the cap assembly described next.

Referring to FIGS. 14 and 15, a cap assembly 144 may further include the cap-up 60 that covers a safety vent 204, and the safety vent 204 may include a flat edge part A51 having the ninth thickness T9 instead of a wing part. The cap-up 60 may be the same as the cap-up of the fourth embodiment, and the safety vent 204 may have the same configuration as the safety vent 201 of the second embodiment described above except that the wing part is replaced with the flat edge part A51. In the rechargeable battery of the fifth embodiment, the safety vent 204 may satisfy the conditions of Equation 2 described above.

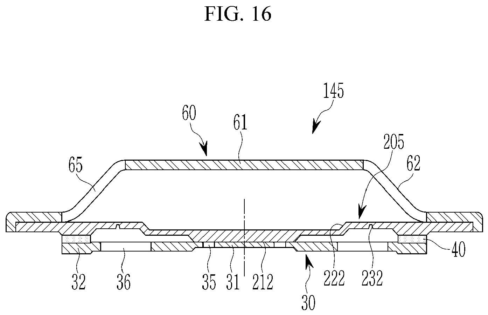

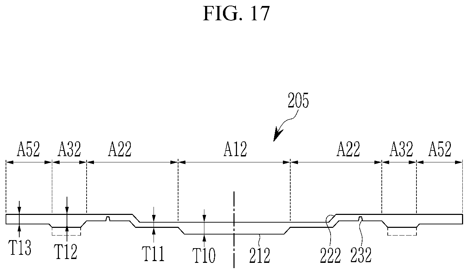

FIG. 16 is a cross-sectional view of a cap assembly of a rechargeable battery according to a sixth embodiment. FIG. 17 illustrates a safety vent in the cap assembly shown in FIG. 16, according to some embodiments. The rechargeable battery of the sixth embodiment has the same configuration as the third embodiment described above, except for aspects of the cap assembly described next.

Referring to FIGS. 16 and 17, a cap assembly 145 may further include the cap-up 60 that covers a safety vent 205, and the safety vent 205 may include a flat edge part A52 having the thirteenth thickness T13 instead of a wing part. The cap-up 60 may be the same as the cap-up of the fourth embodiment, and the safety vent 205 may have the same configuration as the safety vent 202 of the third embodiment described above except that the wing part is replaced with the flat edge part A52. In the rechargeable battery of the sixth embodiment, the safety vent 205 may satisfy the conditions of Equation 3 described above.

According to some embodiments, there is provided method of manufacturing a rechargeable battery. The method may comprise accommodating an electrode assembly in an internal region of a can; and sealing the can with a cap assembly. The cap assembly may include a safety vent and a cap down stacked with a connecting member interposed between the safety vent and the cap down, the safety vent comprising: a central part joined to the cap down; a middle part comprising a step portion and a notch groove; a fusion part in contact with the connecting member; and a wing part surrounding the fusion part; and wherein at least three of the central part, the middle part, the fusion part, or the wing part have different thicknesses.

The wing part may include a first part and a second part overlapping the first part and formed by bending the second part over the first part; and a thickness of the wing part may have a thickness of one of the first part or the second part individually.

The middle part may be disposed between the central part and the fusion part; and the notch groove may be disposed on a first surface of the middle part between the step portion and the fusion part, the first surface facing the cap down.

In some embodiments, sealing the can with the cap assembly may comprise coupling the cap assembly to the can via an insulating gasket surrounding the wing part.

The central part may have a first thickness T1, the middle part may have a second thickness T2, the fusion part may have a third thickness T3, and the wing part may have a fourth thickness T4, and the safety vent may satisfy the following conditions: $T1 > (T2 = T3) > T4$.

The middle part may include an inner part comprising the step portion and an outer part comprising the notch groove; and the central part may have a fifth thickness T5, the inner part may have a sixth thickness T6, the outer part may have a seventh thickness T7, the fusion part may have an eight thickness T8, and the wing part may have a ninth thickness T9, and the safety vent may satisfy the following conditions: $T5 > T6 > (T7 = T8 = T9)$.

The central part may have a tenth thickness T10, the middle part may have an eleventh thickness T11, the fusion part may have a twelfth thickness T12, and the wing part may have a thirteenth thickness T13, and the safety vent may satisfy the following conditions: (T10 = T12) > T13 > T11.

In some embodiments, the method may further comprise forming the safety vent of the cap assembly at least in part by joining the central part to the cap down.

**Claims**

1. A rechargeable battery (100), comprising:

   an electrode assembly (130);
   a can (120) accommodating the electrode assembly (130) in an internal region of the can (120); and
   a cap assembly (140, 141, 142, 143, 144, 145) coupled to the can (120) to seal the can (120), and including a safety vent (20, 201, 202, 203, 204, 205) and a cap down (30) stacked with a connecting member (40) interposed between the safety vent (20, 201, 202, 203, 204, 205) and the cap down (30), the safety vent (20, 201, 202, 203, 204, 205) comprising:

   a central part (A10, A11, A12, 31) joined to the cap down (30);
   a middle part (A20, A21, A22) comprising a step portion (22, 221, 222) and a notch groove (23, 231, 232);
   a fusion part (A30, A31, A32) in contact with the connecting member (40); and
   a wing part (A40, A41, A42) surrounding the fusion part (A30); and

   wherein at least three of the central part (A10, A11, A12, 31), the middle part (A20, A21, A22), the fusion part (A30, A31, A32), or the wing part (A40, A41, A42) have different thicknesses.

2. The rechargeable battery (100) as claimed in claim 1, wherein:

   the wing part (A40, A41, A42) includes a first part (24, 241, 242) and a second part (25, 251, 252) overlapping the first part (24, 241, 242) and formed by bending the second part (25, 251, 252) over the first part (24, 241, 242); and
   a thickness of the wing part (A40, A41, A42) is a thickness of one of the first part (24, 241, 242) or the second part (25, 251, 252) individually.

3. The rechargeable battery (100) as claimed in claim 2, wherein:

   the middle part (A20, A21, A22) is disposed between the central part (A10, A11, A12, 31) and the fusion part (A30, A31, A32); and
   the notch groove (23, 231, 232) is disposed on a first surface of the middle part (A20, A21, A22) between the step portion (22, 221, 222) and the fusion part (A30, A31, A32), the first surface facing the cap down (30).

4. The rechargeable battery (100) as claimed in claim 2 or 3, wherein:
   the cap assembly (140, 141, 142, 143, 144, 145) is coupled to the can (120) via an insulating gasket (50) surrounding the wing part (A40, A41, A42).

5. The rechargeable battery (100) as claimed in any of claims 2 to 4, wherein:
   the central part (A10) has a first thickness T1, the middle part (A20) has a second thickness T2, the fusion part (A30) has a third thickness T3, and the wing part (A40) has a fourth thickness T4, respectively, and the safety vent (20) satisfies the following conditions:

$$T1 > (T2 = T3) > T4.$$

6. The rechargeable battery (100) as claimed in any of claims 2 to 4, wherein:

   the middle part (A21) includes an inner part (A211) comprising the step portion (221) and an outer part (A212) comprising the notch groove (231); and
   the central part (A11) has a fifth thickness T5, the inner part (A211) has a sixth thickness T6, the outer part (A212) has a seventh thickness T7, the fusion part (A31) has an eight thickness T8, and the wing part (A41) has a ninth thickness T9, and the safety vent (201) satisfies the following conditions:

$$T5 > T6 > (T7 = T8 = T9).$$

7. The rechargeable battery (100) as claimed in any of claims 2 to 4, wherein:
the central part (A12) has a tenth thickness T10, the middle part (A22) has an eleventh thickness T11, the fusion part (A32) has a twelfth thickness T12, and the wing part (A42) has a thirteenth thickness T13, and the safety vent (202) satisfies the following conditions:

$$(T10 = T12) > T13 > T11.$$

8. A rechargeable battery (100), comprising:

an electrode assembly (130);
a can (120) accommodating the electrode assembly (130) in an internal region of the can (120); and
a cap assembly (140, 141, 142, 143, 144, 145) coupled to the can (120) to seal the can (120), and comprising:

a safety vent (20, 201, 202, 203, 204, 205);
a cap down (30) stacked with a connecting member (40) interposed between the safety vent (20, 201, 202, 203, 204, 205) and the cap down (30); and
a cap-up (60) covering the safety vent (20, 201, 202, 203, 204, 205),

wherein the safety vent (20, 201, 202, 203, 204, 205) comprises:

a central part (A10, A11, A12, 31) joined to the cap down (30);
a middle part (A20, A21, A22) comprising a step portion (22, 221, 222) and a notch groove (23, 231, 232);
a fusion part (A30, A31, A32) in contact with the connecting member (40); and
an edge part (A50, A51, A52) surrounding the fusion part (A30, A31, A32); and

wherein
and at least three of the central part (A10, A11, A12, 31), the middle part (A20, A21, A22), the fusion part (A30, A31, A32), or the edge part (A50, A51, A52) have different thicknesses.

9. The rechargeable battery (100) as claimed in claim 8, wherein:

the middle part (A20, A21, A22) is disposed between the central part (A10, A11, A12, 31) and the fusion part (A30, A31, A32); and
the notch groove (23, 231, 232) is disposed on a first surface of the middle part (A20, A21, A22) between the step portion (22) and the fusion part (A30, A31, A32), the first surface facing the cap down (30).

10. The rechargeable battery (100) as claimed in claim 8, wherein:
the central part (A10) has a first thickness T1, the middle part (A20) has a second thickness T2, the fusion part (A30) has a third thickness T3, and the edge part (A50) has a fourth thickness T4, and the safety vent (20) satisfies the following conditions:

$$T1 > (T2 = T3) > T4.$$

11. The rechargeable battery (100) as claimed in claim 8, wherein:

the middle part (A21) includes an inner part (A211) comprising the step portion (221) and an outer part (A212) comprising the notch groove (231); and
the central part (A11) has a fifth thickness T5, the inner part (A211) has a sixth thickness T6, the outer part (A212) has a seventh thickness T7, the fusion part (A31) has an eighth thickness T8, and the edge part (A51) has a ninth thickness, and the safety vent (201) satisfies the following conditions:

$$T5 > T6 > (T7 = T8 = T9).$$

12. The rechargeable battery (100) as claimed in claim 8, wherein:
the central part (A12) has a tenth thickness T10, the middle part (A22) has an eleventh thickness T11, the fusion part (A32) has a twelfth thickness T12, and the edge part (A52) has a thirteenth thickness T13, and the safety vent (202) satisfies the following conditions:

$$(T10 = T12) > T13 > T11.$$

13. A method of manufacturing a rechargeable battery (100), the method comprising:

accommodating an electrode assembly (130) in an internal region of a can (120); and
sealing the can (120) with a cap assembly (140, 141, 142, 143, 144, 145), the cap assembly (140, 141, 142, 143, 144, 145) including a safety vent (20, 201, 202, 203, 204, 205) and a cap down (30) stacked with a connecting member (40) interposed between the safety vent (20, 201, 202, 203, 204, 205) and the cap down (30), the safety vent (20, 201, 202, 203, 204, 205) comprising:

a central part (A10, A11, A12, 31) joined to the cap down (30);
a middle part (A20, A21, A22) comprising a step portion (22, 221, 222) and a notch groove (23, 231, 232);
a fusion part (A30, A31, A32) in contact with the connecting member (40); and
a wing part (A40, A41, A42) surrounding the fusion part (A30, A31, A32); and

wherein at least three of the central part (A10, A11, A12, 31), the middle part (A20, A21, A22), the fusion part (A30, A31, A32), or the wing part (A40, A41, A42) have different thicknesses.

14. The method as claimed in claim 13, wherein:

the wing part includes a first part (24, 241, 242) and a second part (25, 251, 252) overlapping the first part (24, 241, 242) and formed by bending the second part (25, 251, 252) over the first part (24, 241, 242); and
a thickness of the wing part is a thickness of one of the first part (24, 241, 242) or the second part (25, 251, 252) individually.

15. The method as claimed in claim 13 or 14, further comprising forming the safety vent (20, 201, 202, 203, 204, 205) of the cap assembly (140, 141, 142, 143, 144, 145) at least in part by joining the central part (A10, A11, A12, 31) to the cap down (30).

FIG. 1

100

140

50

124

123

120

122

# FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

**EP 4 485 636 A1**

Europäisches Patentamt

European Patent Office

Office européen des brevets

# EUROPEAN SEARCH REPORT

Application Number

EP 24 18 2206

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 128 913 B1 (SAMSUNG SDI CO LTD [KR]) 7 September 2022 (2022-09-07)<br><br>* paragraphs [0023], [0035] - [0048], [0052] - [0055]; figures 1B-2B,3 *<br>----- | 1,2,4-6, 8,10,11, 13-15 | INV.<br>H01M50/107<br>H01M50/152<br>H01M50/342<br>H01M50/578<br>H01M50/169 |
| X | US 2010/136388 A1 (KIM DAE-KYU [KR] ET AL) 3 June 2010 (2010-06-03)<br>* paragraphs [0030], [0044], [0059] - [0064], [0068] - [0069], [0075], [0077], [0078], [0083] - [0085], [0112], [0139], [0145]; figures 1B,2B *<br>----- | 1,2,4,7, 8,12-15 | H01M50/171 |
| X | KR 2022 0050455 A (SAMSUNG SDI CO LTD [KR]) 25 April 2022 (2022-04-25)<br>* paragraphs [0027], [0031], [0041] - [0045], [0050] - [0052]; figures 1,3,5 *<br>----- | 1-4,8,9, 13-15 | |

TECHNICAL FIELDS SEARCHED (IPC)

H01M

The present search report has been drawn up for all claims

| Place of search | Date of completion of the search | Examiner |
|---|---|---|
| Munich | 7 November 2024 | Girard, Gaëtan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

30

## ANNEX TO THE EUROPEAN SEARCH REPORT
## ON EUROPEAN PATENT APPLICATION NO.

EP 24 18 2206

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2024

| Patent document cited in search report | | Publication date | Patent family member(s) | | Publication date |
|---|---|---|---|---|---|
| EP 2128913 | B1 | 07-09-2022 | CN | 101593818 A | 02-12-2009 |
| | | | EP | 2128913 A1 | 02-12-2009 |
| | | | JP | 5342304 B2 | 13-11-2013 |
| | | | JP | 2009289741 A | 10-12-2009 |
| | | | KR | 20090124598 A | 03-12-2009 |
| | | | US | 2009297927 A1 | 03-12-2009 |
| US 2010136388 | A1 | 03-06-2010 | CN | 101752517 A | 23-06-2010 |
| | | | EP | 2197064 A1 | 16-06-2010 |
| | | | JP | 5191473 B2 | 08-05-2013 |
| | | | JP | 2010129546 A | 10-06-2010 |
| | | | KR | 20100062886 A | 10-06-2010 |
| | | | US | 2010136388 A1 | 03-06-2010 |
| KR 20220050455 | A | 25-04-2022 | CN | 116325328 A | 23-06-2023 |
| | | | EP | 4231427 A1 | 23-08-2023 |
| | | | KR | 20220050455 A | 25-04-2022 |
| | | | US | 2024021951 A1 | 18-01-2024 |
| | | | WO | 2022080708 A1 | 21-04-2022 |

EPO FORM P0459

For more details about this annex : see Official Journal of the European Patent Office, No. 12/82